# EUROPEAN PATENT APPLICATION

(11) **EP 2 998 147 A1**
(43) Date of publication of application: **23.03.2016**
(21) Application number: 15183908.1
(22) Date of filing: 04.09.2015
(51) Int. Cl.: B60K 28/04, G01S 15/04

(54) **ULTRASONIC PRESENCE DETECTION SYSTEM AND METHOD FOR BUILDING MACHINE**

(30) Priority: 17.09.2014 GB 201416448
(71) Applicant: Clancy Plant Hire Limited, Harefield, Middlesex UB9 6HZ (GB)
(72) Inventor: Davies, Stephen, North Lincolnshire, DN15 8LD (GB)
(74) Representative: Secerna LLP

(57) **Abstract**

Apparatus for sensing an operator in an operator space of a machine, comprising: an ultrasonic sensor positioned relative to an operator space and arranged to detect a presence of an operator within an operator occupancy region of the operator space, said operator occupancy region being spaced apart from the ultrasonic sensor by at least a first predetermined distance and extending up to a second predetermined distance from the sensor; wherein, the sensor is arranged to generate a control signal for deactivating operator controls of the machine responsive to the detection of an absence of the operator in the operator occupancy region.

## Description

### Technical Field

The present invention relates to apparatus and methods for sensing an operator in an operator space of a machine. More specifically but not exclusively, the present invention relates to sensing the presence of an operator in the cab of a machine such as a crane or excavator and deactivating the machine for safety purposes if an operator is not suitably positioned.

### Background

In many areas of industry, heavy machinery such as cranes and excavators are used. Such machinery is large and powerful and safety considerations must be carefully managed. Before an operator is permitted to operate such heavy machinery, it is normal for them to undertake appropriate training. Furthermore, when an operator is operating heavy machinery, they are typically required to do so whilst observing safety rules and guidelines.

For example, in many cases safe operation of heavy machinery requires an operator to occupy a predefined position. The position is such that the operator is protected from any dangerous moving parts of the machinery, is unlikely to fall from the machinery, has good access to all the necessary controls, and has an optimum field of view.

Occasionally, machinery operators may be tempted to ignore safety rules and guidelines particularly if this will save time. For example, an operator may be tempted to operate the controls of the machine from an incorrect position (e.g. leaning into the cab of a machine through a door or window) which would mean that certain safety considerations are compromised (e.g. the operator has as restricted field of view or does not have full access to all of the controls).

Known techniques to ensure that the operator is correctly positioned include the use of a so-called "dead-man's" handle or switch, where a control is provided that can only be actuated if the operator is correctly positioned. In the absence of the control being periodically actuated, the machinery in question is powered down, for example by engaging an engine kill-switch. In some examples a "dead-man's seat" is provided in which the absence of the weight of the operator activates a mechanism, such as an engine kill-switch, to power down the machinery.

However, these technique suffer from a number of drawbacks. For example, it can be relatively straight-forward for an operator to "defeat" a "dead-man" mechanism by manipulating the relevant control so that it is actuated even if the operator is not present. For example, a dead-man's switch could be tampered with so that it is permanently actuated or a weight could be placed on a seat to mimic the presence of an operator on a dead-man's seat.

Furthermore, implementing such techniques normally requires substantial physical modification to the machinery in question, for example, the integration of mechanical switches or handles into existing machinery control systems. Such modifications are complex and can be particularly difficult to retrofit to existing machinery. Moreover, there is typically limited space within an operator space (e.g. cab) of a machine, and it is therefore usually desirable to avoid adding further controls.

It is an aim of the present invention to at least partly mitigate the above-mentioned problems.

It is an aim of certain embodiments of the present invention to provide a method and/or apparatus that enables machinery to be operated safely.

It is an aim of certain embodiments of the present invention to provide a method and/or apparatus that enables a safety mechanism to be conveniently located within an operator space of a machine.

### Summary of the Invention

In accordance with a first aspect of the invention there is provided apparatus for sensing an operator in an operator space of a machine, comprising: an ultrasonic sensor positioned relative to an operator space, and arranged to detect a presence of an operator within an operator occupancy region of the operator space, said operator occupancy region being spaced apart from the ultrasonic sensor by at least a first predetermined distance and extending up to a second predetermined distance from the sensor; wherein, the sensor is arranged to generate a control signal for deactivating operator controls of the machine responsive to the detection of an absence of the operator in the operator occupancy region.

Aptly, the ultrasonic sensor is arranged to detect the absence of the operator by discriminating between ultrasonic waves reflected at distances from the sensor of:
less than the first predetermined distance; between the first predetermined distance and the second predetermined distance, and greater than the second predetermined distance.

Aptly, the ultrasonic sensor comprises an ultrasonic transmitter arranged to transmit the ultrasonic waves, and an ultrasonic receiver arranged to detect reflected ultrasonic waves.

Aptly, the ultrasonic sensor can be calibrated to set the first predetermined distance and to set the second predetermined distance.

Aptly, after detecting the absence of the operator, the sensor is arranged to generate the control signal after a predetermined time delay.

Aptly, the apparatus further comprises a control unit coupled to said ultrasonic sensor, said control unit arranged to receive said control signal, and on receipt of said control signal, to deactivate the operator controls of the machine.

Aptly, after receiving the control signal, the control unit is arranged to cause the operator controls of the machine to be deactivated after a time delay.

Aptly, the operator controls control hydraulically powered equipment of the machine.

Aptly, the operator space is a cab of the machine.

According to a second aspect of the invention, there is provided a method of sensing an operator in an operator space of a machine, said method comprising: detecting, by an ultrasonic sensor positioned relative to an operator space, a presence of an operator within an operator occupancy region of the operator space, said operator occupancy region spaced at least a first predetermined distance from the ultrasonic sensor and extending up to at least a second predetermined distance from the sensor, and responsive to detecting an absence of the operator in the operator occupancy region, generating by the sensor a control signal, said signal for deactivating controls of the machine.

According to a third aspect of the invention there is provided apparatus for sensing an operator in an operator space of a machine or a method of sensing an operator in an operator space of a machine substantially as hereinbefore described with reference to the drawings.

Certain embodiments of the present invention provide an improved technique of detecting the absence of an operator within an operator space (e.g. a cab) of a machine such as a crane or excavator.

It has been recognised that, advantageously, ultrasonic sensors can detect not only whether or not an object is near or in front of the sensor, but at what distance the object is from the sensor. Accordingly, an ultrasonic sensor can be used to define an operator occupancy region which covers an area within which the operator should be positioned if they are to operate the machine correctly (e.g. in accordance with relevant safety guidelines and rules). The operator occupancy region can be some distance from the sensor which means that the sensor can be conveniently positioned at the edge of the operator space (e.g. the wall of a cab) whilst detecting the presence or absence of the operator within an operator occupancy region positioned somewhere towards the centre of the operator space (as is typically the case in most large machine cabs, i.e. an operator seat is positioned centrally within the cab). Advantageously, this also means, an operator cannot "fool" the system by placing an object in close proximity to the sensor.

Furthermore, as ultrasonic sensors can be easily calibrated, the system can be readily adapted to accommodate different operator spaces of different machines.

Various further aspects and features of the invention are defined in the claims.

### Brief Description of Figures

Certain embodiments of the present invention will now be described hereinafter, by way of example only, with reference to the accompanying drawings in which:
Figure 1 provides a schematic diagram of a sensor system arranged in accordance with certain embodiments of the present invention;
Figure 2 provides a schematic diagram of a detailed view of an ultrasonic sensor unit, and
Figures 3a and 3b provide schematic diagrams of an example of a sensor system in use.

### Detailed Description

In the drawings like reference numerals refer to like parts.

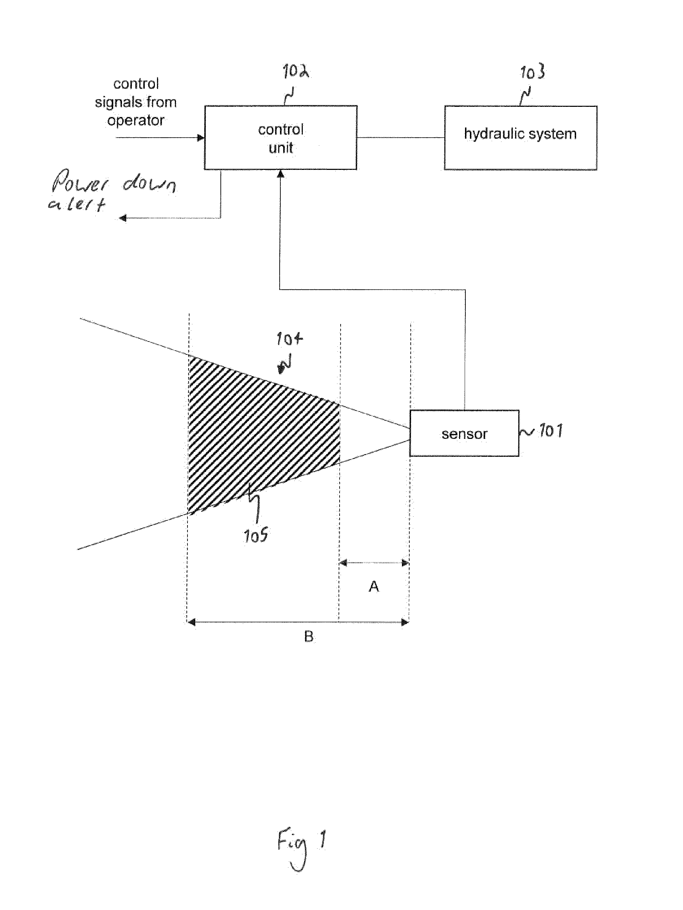

Figure 1 provides a schematic diagram of a sensor system arranged in accordance with certain embodiments of the present invention.

Figure 1 shows an ultrasonic sensor unit 101 arranged to transmit a beam 104 of ultrasonic waves. The ultrasonic sensor unit 101 is further arranged to detect ultrasonic waves reflected from objects in the path of the beam 104.

The ultrasonic sensor unit 101 is positioned within the operator space of a machine, for example the cab of a crane or the cab of an excavator (e.g. a "digger"). The beam 104 of ultrasonic waves transmitted from the ultrasonic sensor unit 101 is directed towards and across an operator occupancy region 105 of the operator space. For example, a seat or chair within the cab on which an operator of the machine will sit when operating the machine. Typically, the operator space defines a physical region within which the operator can safely operate the machine in accordance with the relevant safety rules and guidelines.

The ultrasonic sensor unit 101 is coupled to a machinery control unit 102 which in turn is coupled to a hydraulic system 103. The control unit 103 receives control signals generated by the movement by the operator of physical controls (e.g. switches, handles and levers). The control unit 103 provides corresponding hydraulic control signals to the hydraulic system of the machine. The hydraulic system is the means by which hydraulically powered components of the machine (such as booms, shovels, winches, drills and so on) are operated. Accordingly, the operator of the machine operates the hydraulically powered components of the machine by control signals generated by movement of the physical controls.

The ultrasonic sensor unit 101 contains functionality which enables it to determine the distance of an object from the ultrasonic sensor unit 101 which has reflected the ultrasonic waves. Furthermore, the ultrasonic sensor unit 101 is arranged to determine whether or not an object (i.e. the operator) is positioned no closer to the ultrasonic sensor unit 101 than a first predetermined distance A and no further from the ultrasonic sensor unit 101 than a second predetermined distance B.

The area covered by the beam 104 and the area bounded by the two predetermined distances from the sensor A and B define the operator occupancy region 105.

In the event that the ultrasonic sensor unit 101 does not receive reflected ultrasonic waves from an object within the operator occupancy region 105, the absence of the operator is detected and the ultrasonic sensor unit 101 generates a power-down signal which is transmitted to the control unit 102.

On receipt of the power-down signal from the ultrasonic sensor unit 101, the control unit 102 suspends the transmission of hydraulic control signals to the hydraulic system 103 threreby preventing the physical controls from being used to control the hydraulically powered components of the machine. In this way operator controls of the machine are deactivated.

In certain embodiments the control unit 102 sends a power-down alert signal to the physical controls which can be used to control an alert mechanism which indicates to the operator that operation of the hydraulic system and associated hydraulically powered components has been suspended. In certain embodiments the alert mechanism comprises a visual indicator such as a flashing light and/or an audible indicator such as a buzzer.

In certain embodiments, the physical controls have an operational mode when the hydraulic system is powered on and a non-operational mode when the hydraulic system is powered down. In the operational mode the physical controls, particularly if they are levers or joysticks, provide a resilient type of movement in which input forces required to move the controls are resisted to some degree and in the absence of any input force the control returns to a predetermined, for example upright, position. In the non-operational mode the physical controls do not resist input forces and go "limp". The non-operational mode, compared to the operational mode, gives an operator a strong psychological cue that the physical controls are not "on" and that they are not controlling the machine's physical components.

In these embodiments, the power-down alert signal sent from the control unit 102 to the physical controls causes the physical controls to be put into the non-operational mode.

Advantageously, the system will deactivate the physical controls, and in certain embodiments, put the physical controls into the non-operational mode, if an object is detected by the ultrasonic sensor unit 101 but it is within the area of the beam 104 anywhere up to a distance from the ultrasonic sensor unit 101 of predetermined distance A. This means that the sensor system cannot be defeated by an operator, either intentionally or unintentionally, placing an object directly in front of the sensor or close to the sensor.

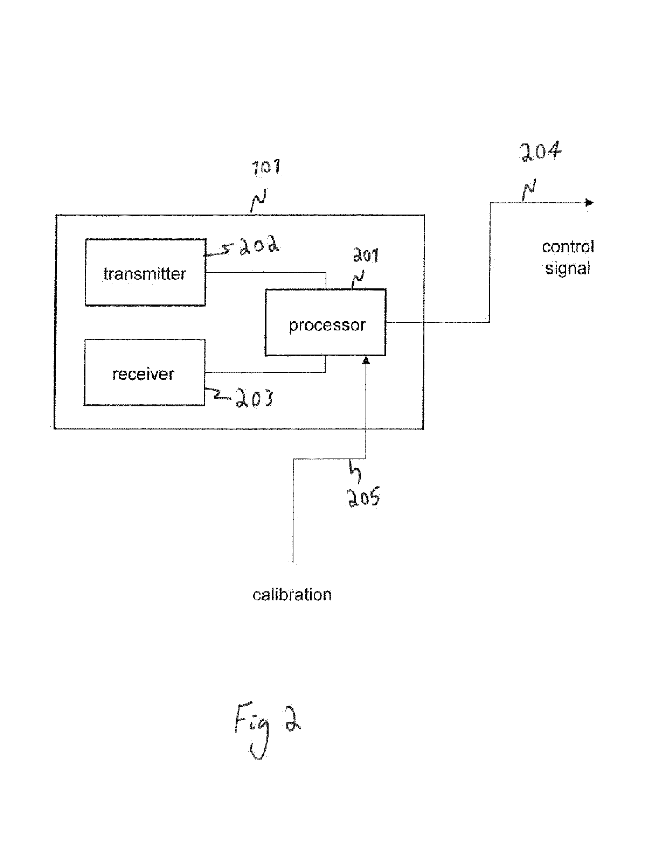

Figure 2 provides a schematic diagram of a more detailed view of the ultrasonic sensor unit 101.

As shown in Figure 2, the ultrasonic sensor unit 101 includes an ultrasonic wave transmitter 202, an ultrasonic wave receiver 203 and a processor unit 201. The ultrasonic wave transmitter 202 is arranged to transmit a beam of ultrasonic waves as described above, and the ultrasonic receiver 203 is arranged to detect reflected ultrasonic waves transmitted from the ultrasonic transmitter 202. The processor unit 201 is arranged to control the transmission of the ultrasonic waves from the transmitter 202. On receipt of a reflected ultrasonic wave, the receiver 203 is arranged to send a signal to the processor unit 201. The processor unit 201 then calculates a time delay between the transmission of the ultrasonic waves and the receipt of the reflected ultrasonic waves. The propagation speed of the ultrasonic waves is a known constant, and on this basis the processor unit 201 calculates a distance from the ultrasonic sensor unit 101 of an object that reflected the ultrasonic waves. This enables the sensor 101 to discriminate between ultrasonic waves reflected from objects positioned inside of outside of the operator occupancy region.

The processor unit 201 is connected to an output line 204 which is connected to the control unit 102 described above. The processor unit 201 sends the power-down signal to the control unit 102 via the output line 204 in response to the processor determining that no objects have reflected any of the ultrasonic waves within the operator occupancy region 105. To this end, in certain embodiments, the processor unit 201 is connected to a calibration line 205 on which the processor unit receives calibration signals. The calibration signals calibrate aspects of the operation of the processor unit 201. For example, certain calibration signals allow the predetermined distances A and B to be set.

In this way, the size of operator occupancy region and its distance from the ultrasonic sensor unit 101 can be readily set so that the system can be fitted to machines with differently sized and positioned operator spaces.

The calibration signals can be generated by any suitable means, for example by input controls (e.g. buttons, switches, dials and so on) on the ultrasonic sensor unit. In other examples, a data port is coupled to the calibration line 205 and control signals generated from an external device are input via the data port.

In certain embodiments a predetermined time delay may be implemented such that if during operation, the processor unit 201 determines that an object is no longer detected in the operator occupancy region, a predetermined period of time passes before the physical controls are deactivated. The time delay can allow for the fact that an operator may, briefly, shift position (e.g. stand up to stretch or bend down to pick something up) whilst still operating the machine safely.

In certain embodiments, the time delay may be implemented by the processor unit 201 only transmitting the power down signal to the control unit 102 when it is detected that the operator occupancy region 105 has been unoccupied for a predetermined time. This predetermined time can be set by calibration signals received by the processor unit 201 on the calibration line 205. In other embodiments, the time delay can be implemented by the control unit 102. That is, the control unit only suspends transmission of hydraulic control signals to the hydraulic system 103 after the power-down signal from the processor 201 has been received, uninterrupted, or substantially uninterrupted, for a predetermined period of time.

In certain embodiments, where a time delay is implemented, an operator alert mechanism is provided which alerts the operator to the fact that the sensor system does not detect the operator's presence within the operator occupancy region 105. The operator alert mechanism can be in the form of a sounder to deliver an audible alert and/or a light to deliver a visual alert. In this way, the operator is alerted to the fact that the system does not detect his or her presence and that the transmission of hydraulic control signals will be suspended imminently.

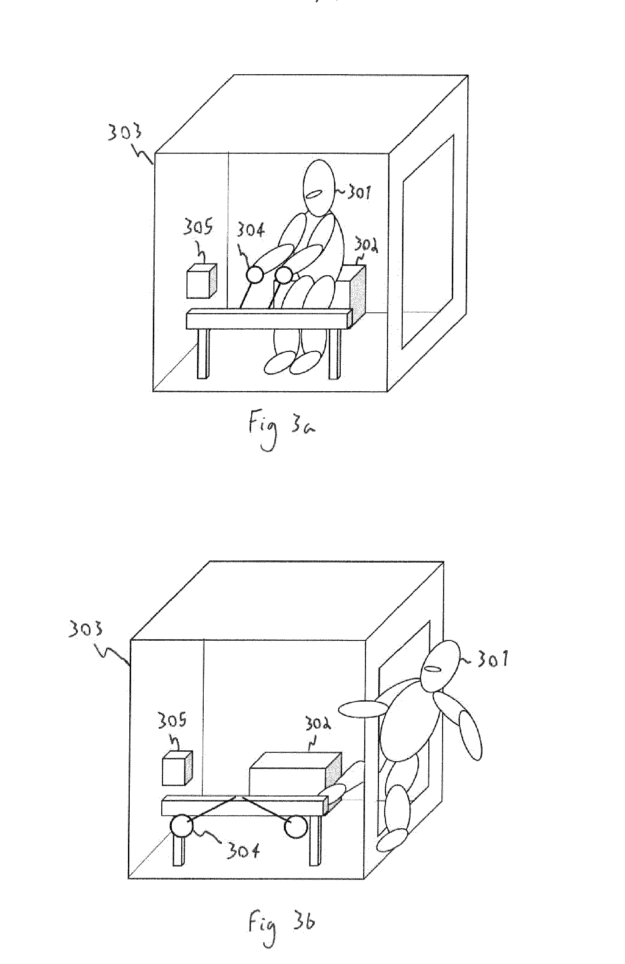

Figures 3a and 3b provide schematic diagrams of an example of a sensor system in use.

Referring to Figure 3a, an operator 301 is seated on a seat 302 within the cab 303 of a machine. The operator 301 is positioned correctly and in accordance with relevant rules and guidelines to operate a set of physical controls 304. An ultrasonic sensor unit 305 is positioned on a wall of the cab 303 and operates in conjunction with a control unit (not shown) as described above. The sensor unit 305 is positioned and calibrated such that an operator occupancy region is defined over an area which covers a position that the operator 301 occupies when correctly positioned within the cab 303 (i.e. on the seat 302). Typically, the ultrasonic sensor unit 305 is positioned at a height so that transmitted ultrasonic waves are incident on the trunk of the body of the operator 301 when positioned correctly.

Referring to Figure 3b, the operator 301 has adopted a position which is away from the seat 302 and is no longer correctly positioned in the cab 303. The sensor unit 304 is calibrated such that the position occupied by the operator 301 is outside of the operator occupancy region. The absence of the operator 301 from the occupancy region is detected by the sensor 304 and as a result, the control unit suspends transmission of hydraulic control signals from the physical controls, i.e. the controls are deactivated. Further, the physical controls are placed in a non-operational mode in which they go "limp".

As will be understood, sensor systems in accordance with embodiments of the invention can be implemented in a variety of different ways. For example, in certain embodiments, for example where it is very important that a user retains control of the machine, irrespective of their position (for example, during an intricate operation in which loss of operator control could pose a hazard) the sensor system can be overridden. For example, during specific phases of machine operation, the control unit is arranged to ignore the power-down signal received from the ultrasonic sensor.

In some situations, it may be preferable to operate the sensor system only when a machine is being powered-on. That is, the power-down control signal generated by the sensor is used only to determine whether or not to allow the machine to be powered-up (e.g. switching on the machine's engine and activating the hydraulic system). Once the machine is powered-up, control signals from the sensor are disregarded.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. Apparatus for sensing an operator in an operator space of a machine, comprising: an ultrasonic sensor positioned relative to an operator space, and arranged to detect a presence of an operator within an operator occupancy region of the operator space, said operator occupancy region being spaced apart from the ultrasonic sensor by at least a first predetermined distance and extending up to a second predetermined distance from the sensor; wherein,
the sensor is arranged to generate a control signal for deactivating operator controls of the machine responsive to the detection of an absence of the operator in the operator occupancy region.

2. Apparatus according to claim 1, wherein the ultrasonic sensor is arranged to detect the absence of the operator by discriminating between ultrasonic waves reflected at distances from the sensor of:
less than the first predetermined distance;
between the first predetermined distance and the second predetermined distance, and
greater than the second predetermined distance.

3. Apparatus according to claim 1 or 2, wherein the ultrasonic sensor comprises an ultrasonic transmitter arranged to transmit the ultrasonic waves, and an ultrasonic receiver arranged to detect reflected ultrasonic waves.

4. Apparatus according to any previous claim, wherein the ultrasonic sensor can be calibrated to set the first predetermined distance and to set the second predetermined distance.

5. Apparatus according to any previous claim, wherein after detecting the absence of the operator, the sensor is arranged to generate the control signal after a predetermined time delay.

6. Apparatus according to any of claims 1 to 4, further comprising a control unit coupled to said ultrasonic sensor, said control unit arranged to receive said control signal, and on receipt of said control signal, to deactivate the operator controls of the machine.

7. Apparatus to claim 6, wherein after receiving the control signal, the control unit is arranged to cause the operator controls of the machine to be deactivated after a time delay.

8. Apparatus according to claim 6 or 7, wherein the operator controls control hydraulically powered equipment of the machine.

9. Apparatus according to any preceding claim, wherein the operator space is a cab of the machine.

10. A method of sensing an operator in an operator space of a machine, said method comprising:
detecting, by an ultrasonic sensor positioned relative to an operator space, a presence of an operator within an operator occupancy region of the operator space, said operator occupancy region spaced at least a first predetermined distance from the ultrasonic sensor and extending up to at least a second predetermined distance from the sensor, and responsive to detecting an absence of the operator in the operator occupancy region, generating by the sensor a control signal, said signal for deactivating controls of the machine.

11. Apparatus for sensing an operator in an operator space of a machine or a method of sensing an operator in an operator space of a machine substantially as hereinbefore described with reference to the drawings.
